# EUROPEAN PATENT SPECIFICATION

(11) **EP 1 131 702 B1**
(45) Date of publication and mention of the grant of the patent: **22.04.2009**
(21) Application number: 99972322.4
(22) Date of filing: 12.11.1999
(51) Int. Cl.: G06F 9/38

(54) **IMPROVED HANDLING OF THE RESULTS OF SPECULATIVELY EXECUTED JOBS IN A MULTIPROCESSING SYSTEM**
VERBESSERTE BEARBEITUNG DER ERGEBNISSE VON SPEKULATIV AUSGEFÜHRTEN JOBS IN EINEM MULTIVERARBEITUNGSSYSTEM
TRAITEMENT AMÉLIORE DES RÉSULTATS DES TÂCHES EXÉCUTÉES SPÉCULATIVEMENT DANS UN SYSTÈME MULTITRAITEMENT

(30) Priority: 16.11.1998 SE 9803901; 22.06.1999 SE 9902373
(43) Date of publication of application: 12.09.2001
(73) Proprietor: TELEFONAKTIEBOLAGET LM ERICSSON (publ), 164 83 Stockholm (SE)
(72) Inventor: HOLMBERG, Per, Anders, S-118 42 Stockholm (SE); KLING, Lars-Örjan, S-151 52 Södertälje (SE); JOHNSON, Sten, Edward, S-123 42 Farsta (SE); EGELAND, Terje, S-139 56 Värmdö (SE)
(86) International application number: PCT/SE1999/002063
(87) International publication number: WO 2000/029941

(56) References cited:
- WO-A1-99/31589
- US-A- 5 287 467
- US-A- 5 511 172
- US-A- 5 740 393
- US-A- 5 812 839
- US-A- 5 870 597
- US-A- 5 875 326

## Description

### TECHNICAL FIELD OF THE INVENTION

The present invention generally relates to processing technology, and more particularly to a processing system having multiple processors or processing units.

### BACKGROUND OF THE INVENTION

With the ever-increasing demand for improved processing capacity in computer or processing systems comes the need for faster and more efficient processors. The conventional approach for increasing processing capacity relies on the use of higher and higher clock frequencies and faster memories.

A common way of increasing the processing capacity of a processing system, especially without modifying the application software, is to use so-called superscalar processors, which explore fine-grained parallelism found between neighboring instructions. In a superscalar processor, the functional units within the processor are arranged to simultaneously execute several instructions in parallel. This is sometimes referred to as instruction-level parallelism.

Another way of increasing the processing capacity is to build the processing system as a multiprocessor system, i.e. a processing system with multiple processors operating in parallel. Some processing systems achieve high performance processing through an architecture known as Symmetrical Multi Processors (SMPs). In contrast to the fine-grained parallelism achieved by a superscalar processor, the SMP architecture exploits coarse-grained parallelism that is either explicitly specified in programs designed according to concurrent programming principles, or extracted from programs designed for sequential execution on a single-processor system during compilation. In an SMP architecture, each one of several tasks is carried out on a respective one of several processors. These tasks are mutually concurrent processes or threads.

In the article *Multiscalar Processors* by Sohi, Breach and Vijaykumar, 22nd Annual International Symposium on Computer Architecture, Santa Margherita, Ligure, Italy (1995), a so-called multiscalar processor is described. In the multiscalar model of execution, a control flow graph (CFG) representing a static program with regard to control dependencies is partitioned into tasks, and the multiscalar processor walks through the CFG speculatively, taking task-sized steps, without pausing to inspect any of the instructions within a task. A task is assigned to one of a collection of processing units for execution by passing the initial program counter of the task to the processing unit. Multiple tasks can then execute in parallel on the processing units, resulting in an aggregate execution rate of multiple instructions per cycle. The function of the multiscalar hardware is to walk through the CFG, assign tasks to the processing units and execute these tasks with the appearance of sequential execution. Additional hardware is provided to hold speculative memory operations, detect violations of memory dependencies, and initiate corrective action as needed. Since the task at the head is the only task that is guaranteed to be non-speculative, memory operations carried out by all units, except the head, are speculative.

U.S. Patent 5,832,262 generally relates to a real-time hardware scheduler that works in conjunction with a scheduling processor to manage multiple tasks to be executed by one or more other processors. The scheduler manages circular FIFO queues in a shared memory through two real-time hardware scheduling units, one of which manages tasks awaiting execution and the other of which manages tasks which have been completed. The scheduling processor acts on request to schedule new tasks by building a task control block and storing that block in the shared memory at a particular memory location. A pointer to that location is then transmitted by the scheduling processor to the real-time hardware scheduler. A slave processor may retrieve a pointer to the location in the shared memory of a task awaiting execution. The slave processor then uses the pointer to retrieve the actual task, executes the task and notifies the scheduler of task completion. The above patent thus relates to indirect signal handling in a conventional multitasking system.

U.S. Patent 5,781,763 discloses a processor in which instructions are executed speculatively. The processor has multiple superscalar execution units dedicated to predetermined operations so that instruction-level parallelism is obtained.

U.S. Patent 5,560,029 discloses a data processing system with a synchronization coprocessor used for multi-threading purposes.

U.S. Patent 5,195,181 generally relates to message handling and more particularly to a method for transferring messages between separate receive and transmit processors by using pointers.

The article "Software and Hardware for Exploiting Speculative Parallelism with a Multiprocessor", by Oplinger et al. from Stanford University Computer System Lab, February 1997, relates to the exploitation of speculative parallelism with a multiprocessor by using a fully automated compiler system. Thread-level speculation (TLS) makes it possible to parallelize general purpose C programs, and makes it feasible to find speculative do-across parallelism in outer loops that can greatly improve the performance of general-purpose applications. A fully automated compiler system uses profile information to determine the best loops to execute speculatively, and to generate the synchronization code that improves the performance of speculative execution. During speculation mode a write buffer is assigned to each processor. When a processor completes a commit operation the contents of the buffer are transferred to a secondary cache.
However, there is still a general demand for more efficient processing systems.

### SUMMARY OF THE INVENTION

In general, the invention is directed towards a multiprocessing system in which jobs are executed speculatively in parallel. By speculating on the existence of more coarse-grained parallelism, so-called job-level parallelism, and backing of to sequential execution only in cases where dependencies that prevent parallel execution of jobs are detected, a high degree of parallelism can be extracted. Although this approach allows jobs to be executed in parallel by different processors, executed jobs must be committed, i.e. retired, in order, and the speculatively executed jobs await priority to commit memory writes and signal sendings.

Speculative execution of jobs generally requires mechanisms for detecting dependencies to determine whether speculation succeeded or not as well as mechanisms for holding results of speculatively executed jobs. If speculation succeeds the results are finally committed, and if speculation fails the results are flushed and the corresponding jobs are restarted. Normally, results of speculatively executed jobs are held in intermediate memory locations and at commit results are transferred from intermediate memory locations to real locations in the main memory and/or to external units. Alternatively, old data from the "real locations" are stored away in a history log, and the speculative results are written into the real locations. If speculation fails, the real locations are restored by using the history log to reinstate the old data. If speculation succeeds, the speculative data is already in proper place in the real locations.

During development of such a processing system it has been realized that although speculation in itself is a very efficient way of increasing the system performance, the mechanisms for handling speculative results constitute a bottleneck for improving the performance even further.

The invention overcomes this and other related problems in an efficient manner.

It is general object of the present invention to provide an efficient multiprocessing system which is capable of providing a high degree of parallelism.

It is another object of the invention to provide an efficient method for handling results in a multiprocessing system.

These and other objects are met by the invention as defined by the accompanying patent claims.

The general idea according to the invention is to speculatively allocate a private memory buffer in shared memory for holding results of a speculatively executed job, and speculatively write the results directly into the allocated memory buffer. When commit priority is assigned to the speculatively executed job, only a pointer referring to the allocated memory buffer is transferred to an input/output device which may then access the results from memory buffer in shared memory by means of the transferred pointer. This mechanism supports speculative writing of communication messages, operation system calls and job signals to private memory buffers that are accessible by I/O-devices such as I/O-processors, network controllers, Ethernet circuits or job signal schedulers. This by itself means that more parallelism is extracted, since not only the execution of the corresponding job is performed speculatively, but also the allocation and writing to the memory buffer.

The invention also allows fast recovery when a dependency is detected, since only the pointer needs to be restored and no restoration of individual data is required.

The processors may transfer all information related to a communication message, an operation system call or a new job signal in speculative mode, thereby spreading out the transmission of data in time and lowering the bandwidth requirement.

For hardware implemented speculation using specialized hardware, it is not necessary for writes to the allocated memory buffers to go through the hardware queues used for holding speculative states of variables, reducing the pressure on these hardware queues.

For software implemented speculation using standard off-the-shelf microprocessors, the code for doing speculative writes is substantially reduced.

It has also been realized that speculative writes of new records and objects directly into allocated private memory buffers in the shared main memory can be supported. A new record or object generated by a speculatively executed job is speculatively allocated a private memory buffer and when commit priority is assigned to the speculatively executed job, the new record or object is already in place in the main memory and no further transfer is necessary. At commit priority, a pointer referring to the allocated memory buffer is handed over to shared memory.

However, the mechanism according to the invention is generally not customized for speculative writes of variables, since the locations of non-speculative states of variables can not be private memory locations but must be shared memory locations.

The invention offers the following advantages:
- A high degree of parallelism is provided;
- Overhead for speculative execution is minimized - accesses to speculatively allocated memory buffers do not need support for roll-backs and dependency checks;
- Bandwidth requirement is reduced;
- Memory area in write queues is saved, preventing the processing units from stalling;
- Faster off-loading at commit priority since only pointers are transferred;
- Generated communication messages and job signals are only written once.

Other advantages offered by the present invention will be appreciated upon reading of the below description of the embodiments of the invention.

### BRIEF DESCRIPTION OF THE DRAWING

The invention, together with further objects and advantages thereof, will be best understood by reference to the following description taken together with the accompanying drawings, in which:
Fig. 1 is a simplified diagram of a general processing system according to the invention;
Fig. 2 is a schematic flow diagram of a method for handling results generated by speculatively executed jobs according to the invention;
Fig. 3 is a schematic diagram illustrating a processing system according to a preferred embodiment of the invention; and
Fig. 4 is a schematic diagram illustrating a processing system according to another preferred embodiment of the invention.

### DETAILED DESCRIPTION OF EMBODIMENTS OF THE INVENTION

Throughout the drawings, the same reference characters will be used for corresponding or similar elements.

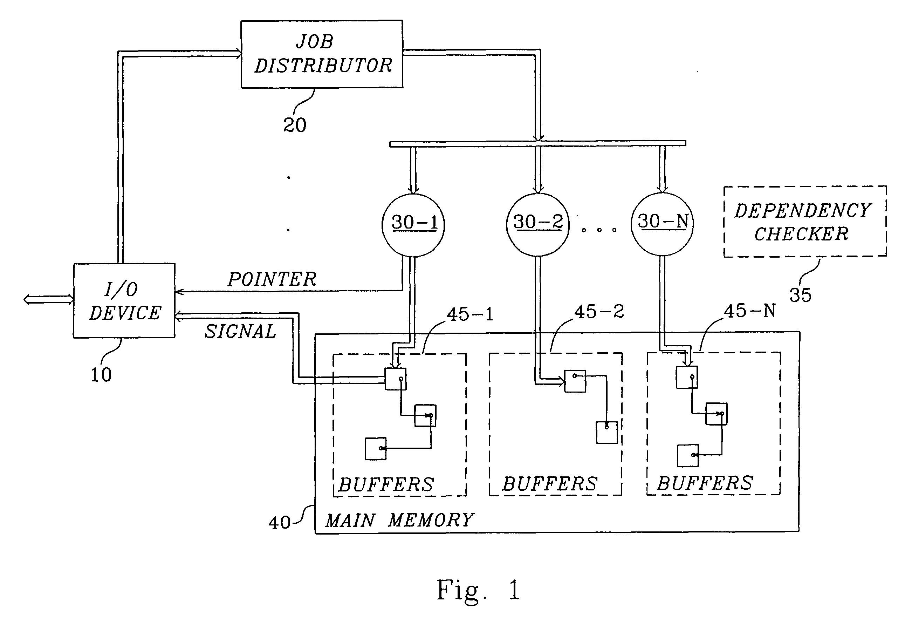

For a better understanding of the invention, the general principles for speculative result handling according to the invention will now be described briefly with reference to Fig. 1.

Fig. 1 is a simplified diagram of a general processing system according to the invention. The processing system comprises an input/output (I/O) device 10, a job distributor 20, multiple processors or processing units 30-1 to 30-N, a dependency checker 35 and a main memory 40.

The I/O-device 10 receives and sends signals and messages. The job distributor 20 receives job signals from the I/O-device 10 and assigns job signals to the processors 30-1 to 30-N for parallel execution of jobs. During parallel execution, one of the jobs is assigned commit priority and executed non-speculatively, whereas the other jobs are executed speculatively. The processors 30 can be any kind of processing units, ranging from commercial symmetrical multiprocessors to execution pipelines realized entirely in hardware. The dependency checker 35 is configured to detect data dependencies between the speculatively executed jobs and the job with commit priority to determine whether the speculative executions succeeded or not. During execution, the checker 35 makes dependency checks on data accesses to check that the program order of reads and writes is preserved. Dependency checking may be realized in any of a number of ways. For example, by means of an address comparison method or a variable marker method as will be described later on.

According to the invention, a number of memory buffers are allocated in the main memory 40 for results such as communication messages, operation system (OS) calls and new job signals generated by speculatively executed jobs. Preferably, the memory buffers are partitioned into pools 45-1 to 45-N of buffers, and each processor 30 has its own pool 45 of buffers. Conveniently, each pool of buffers is implemented as a linked list in the main memory, as indicated in Fig. 1.

A communication message or similar generated by a speculatively executed job is speculatively allocated a private memory buffer in the pool 45 of buffers assigned to the corresponding processor 30, and the message is speculatively written into the allocated private buffer as indicated in Fig. 1. Speculative execution should not include the actual sending of the message. This means that the message should not be handed over from the allocated buffer to the communication channel until the corresponding job gets commit priority. When commit priority is assigned to a speculatively executed job, a pointer to the allocated memory buffer is thus transferred to the I/O-device 10. The main memory 40 is shared by the I/O-device 10 and the processors 30-1 to 30-N so the I/O-device 10 can retrieve the communication message by means of the transferred pointer.

The pointer can be transferred to the I/O-device in any of a number of ways. For example, three basic procedures of transferring the pointer to the I/O-device are outlined below:
i) At commit, the pointer is written directly from the relevant processor to the I/O-device;
ii) At commit, the pointer is written into a memory means which is checked for pointers by the I/O-device.
iii) The pointer is speculatively written into an intermediate memory location, and at commit, the pointer is transferred from the intermediate memory location to the I/O-device.

If a dependency is detected indicating that the speculation failed, the allocated memory buffer is simply deallocated, enabling fast recovery.

By supporting not only speculative execution, but also speculative allocation of buffers for communication messages, new job signals and OS calls, parallelism is exploited even further.

The invention is also applicable to speculative writes of new records in a functional programming language or new objects in an object oriented programming language. In this case, a new record or object generated by a speculatively executed job is speculatively allocated a private memory buffer in the main memory, and written into the private buffer. If speculation fails, the private buffer is simply deallocated. On the other hand, if speculation succeeds, the new record or object is already in place in the main memory at commit, and no further transfer is necessary. The new record/object can be utilized by handing over the corresponding pointer to shared memory - for example by writing the pointer into a variable in the shared memory. The record/object may be used in execution and when not required any more it is simply discarded and the corresponding memory buffer is deallocated. The pointer can also be transferred to an external unit.

Objects and records often have a more varying size than communication messages and job signals, and memory buffers for records/objects are conveniently allocated from a memory area called a 'heap'. For ordinary programming models, for example in the case of a C program executing on a Unix system, there is normally one heap per process so that different programs will not be able to destroy each others data. Each memory buffer then have to be returned to the heap from which it was allocated.

The mechanism according to the invention makes use of the fact that the memory buffers are free (private) when allocated, and consequently there are no vital states in the buffers that can be destroyed.

It should be understood that the invention is generally not customized for variables, since non-speculatively executed jobs must be able to modify the states of variables held in shared memory locations. Therefore, speculative states of variables are normally stored temporarily in intermediate locations, and transferred from the intermediate locations to the real locations as they are converted to non-speculative states at commit.

If a speculatively executed job does not generate any variable states, but only new messages, signals or records/objects, any mechanism for implementing dependency checks can be bypassed since a memory buffer can be allocated only to one job at a time, even if the allocation is made speculatively. This is vital for software implemented speculation where dependency checking normally is implemented by instrumenting read and write instructions with extra code.

If application software written for a single-processor system is to be migrated to and reused in a standard multiprocessor environment, the application software can be transformed via recompilation or equivalent. For example, a sequentially programmed application software may be automatically transformed by adding appropriate code for supporting speculative execution, including code for dependency checking and code for storing a copy of modified variables to enable proper flush or roll-back of a job, and then recompiling the software. The operating system or virtual machine of the standard multiprocessor system may also be modified to give support for speculative execution. For example, if a dependency is detected when executing code for dependency checking, the control may be transferred to the operating system/virtual machine which flushes the relevant job.

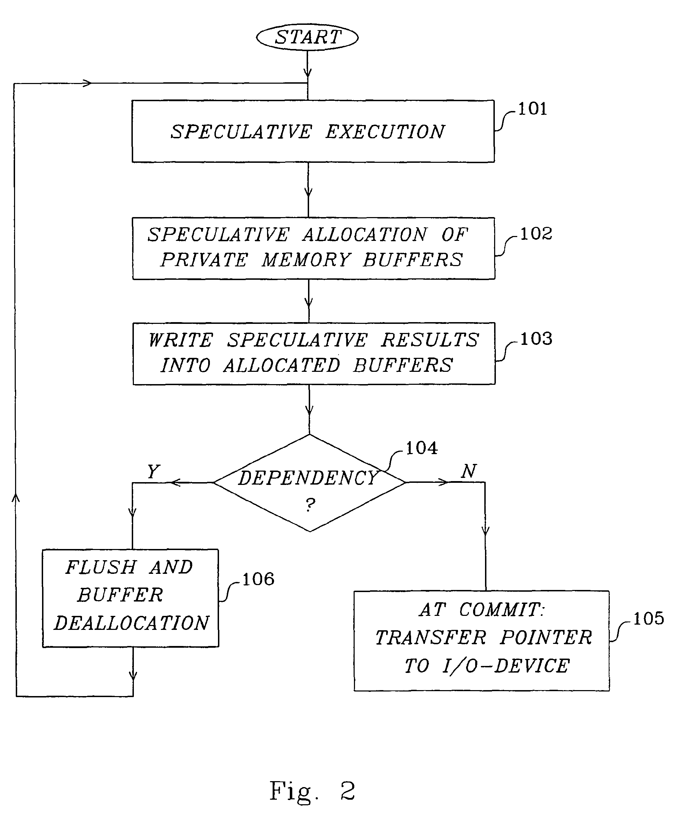

Fig. 2 is a schematic flow diagram of a method for handling results generated by speculatively executed jobs according to the invention. The following sequence of steps can be performed by elements of a computer or processor system. It should be realized that the various steps could be performed by specialized hardware, by program instructions executed by processors, or by a combination of both. In step 101, jobs are executed speculatively in parallel, and commit priority is successively assigned to the jobs, one at a time, according to an order allowed by the programming model. For example, the jobs are committed, i.e. retired, according to a global order of creation. In step 102, private memory buffers are speculatively allocated for holding results of speculatively executed jobs, and in step 103 the speculative results are written into the allocated memory buffers. During execution, dependency checks are made on data variable accesses, as indicated in step 104. If no dependency is detected (N) for a speculatively executed job, the pointer to the corresponding memory buffer is transferred to the I/O-device when commit priority finally is assigned to the speculatively executed job (step 105). On the other hand, if a dependency is detected (Y), the corresponding job is flushed and the allocated memory buffer is deallocated (step 106) and execution of the job is restarted (returning to step 101).

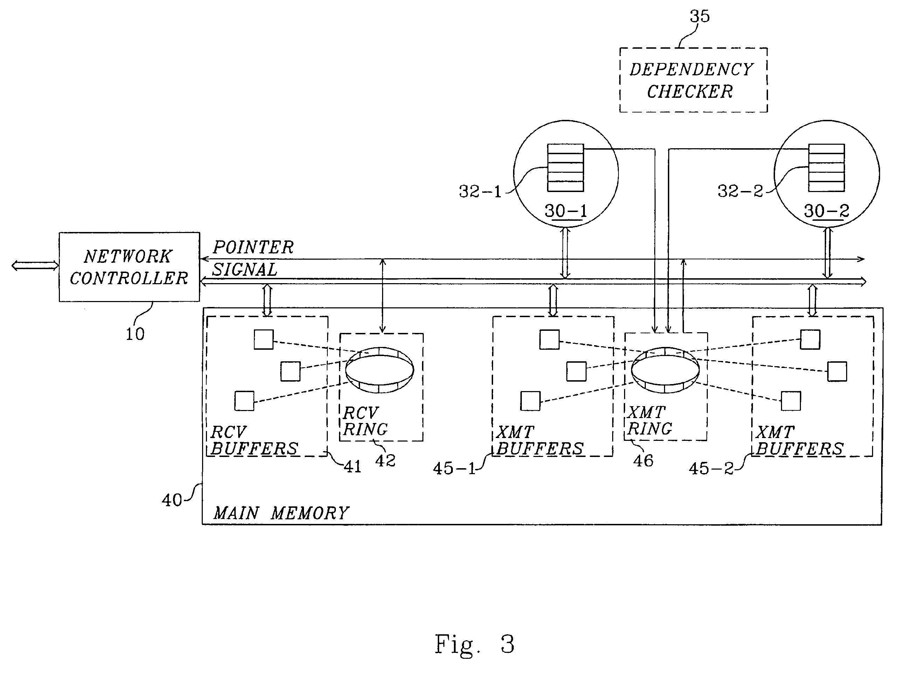

Fig. 3 is a schematic diagram illustrating a simplified processing system according to a preferred embodiment of the invention. The processing system comprises an I/O-device in the form of a network controller 10, processors 30-1 and 30-2, a dependency checker 35 and a main memory 40. An example of a standard network controller 10 is an Ethernet controller such as AMD PC net-FAST chip (AM79C971). The network controller 10 normally has transmitter and receiver sections for handling incoming and outgoing messages and signals. The receiver section includes or is associated with a number of receive buffers 41 for storing incoming messages, and a corresponding receive memory ring 42 for storing pointers to the buffers. Normally, a job is initiated in one of the processors, either periodically or at interrupt when a new message arrives, to check the receive ring 42 for pointers to messages that have been written into the receive buffers 41 by the network controller 10. If a pointer to a message is found, a job signal is created and scheduled, together with other job signals, for execution by one of the processors. Although only two processors are shown in Fig. 3, it should be evident that it is possible to use more than two processors for parallel job processing.

For speculative message "sending", there is preferably a common pool of private memory buffers in the main memory 40 that are used for holding messages as well as other signals generated by speculatively executed jobs, and a central list of pointers, normally in the form of memory addresses, to free buffers. Advantageously, each processor 30 has its own so-called "free list" 32 of pointers to free buffers in the common pool, thus logically partitioning the common pool of buffers into a number of smaller processor-dedicated pools 45-1 and 45-2 of so-called transmit buffers. The smaller private pools 45-1 and 45-2 of buffers can be filled with more buffers from/release buffers into the common pool at high/low watermarks in the smaller pools by making appropriate changes in the free lists and the central list of pointers.

Either the free lists 32-1 and 32-2 are physical lists in the processors 30-1 and 30-2, respectively, or allocated in the main memory 40.

A speculative allocation of a memory buffer for a new message generated by a speculatively executed job can be made by consulting the head of the free list 32 of pointers associated with the corresponding processor 30. The pointer stored in the head entry of the free list 32 points to the allocated memory buffer, and the message is speculatively written into the allocated buffer. A so-called "next pointer" is advanced to point to the next entry in the free list.

If speculation fails, the allocated memory buffer is deallocated by returning the "next pointer" to the head of the free list. If speculation succeeds, the pointer stored at the head entry of the free list is transferred from the free list 32 to a transmit memory ring 46 in the main memory 40 at commit and then removed from the list so that the entry indicated by the "next pointer" becomes the new head of the free list.

Advantageously, the memory ring 46 is configured as a descriptor ring allocated in a memory shared by the processors 30 and the network controller 10. The actual sending of a message is initiated by transferring a descriptor from the free list 32 of the corresponding processor 30 into the descriptor ring 46 at commit. Preferably, each descriptor includes a) the address to the message buffer (the actual pointer), b) the length of the memory buffer and c) status information indicating the condition of the buffer. For example, the network controller 10 periodically polls the descriptor ring for valid descriptors. If the network controller 10 finds a valid descriptor, it sends the message stored in the memory buffer pointed out by the address field of the descriptor.

For general information on buffer management using descriptor rings, reference is made to the AMD PC net-FAST chip AM79C971 data sheet pp 58-63.

Using one pool per processor is an optimization that gives a very simple procedure for returning buffers at flush - allocation of buffers and returning buffers can be performed in parallel by several processors, and no synchronizations are required to access the common pool. In addition, returned buffers are reused by the same processor, resulting in a high cache hit ratio when there is one data cache per processor.

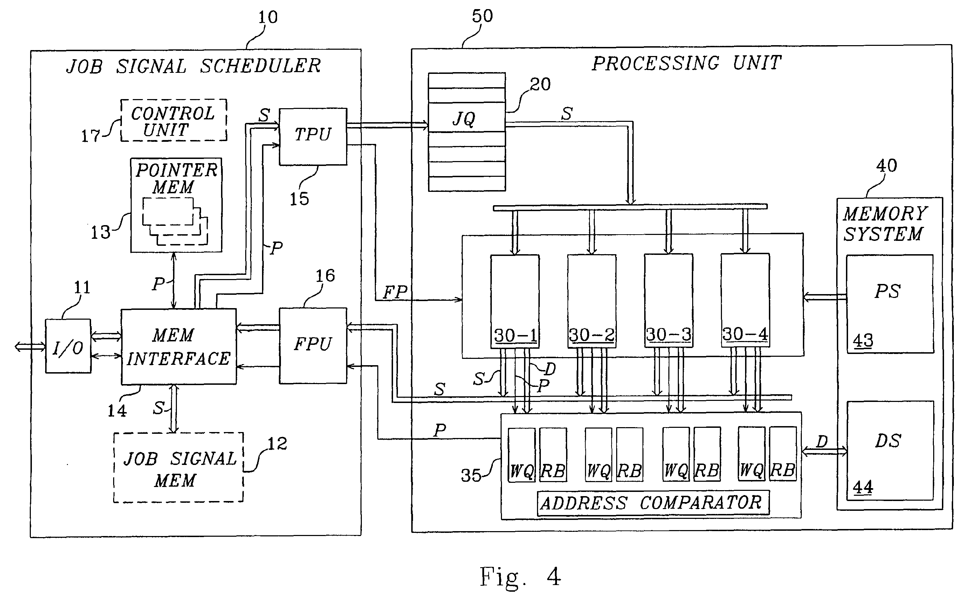

Fig. 4 is a schematic diagram illustrating a processing system according to another preferred embodiment of the invention. The processing system basically comprises an I/O-device 10 in the form of a job signal scheduler, and a processing unit 50.

The job signal scheduler 10 includes an input/output unit 11, a job signal memory 12, a pointer memory 13, a memory interface 14, a TPU unit (To-Processors Unit) 15, an FPU unit (From-Processors Unit) 16 and a control unit 17. The job signal scheduler 10 receives job signals from external units as well as from the processing unit 50, and schedules the job signals for processing.

The input/output unit 11 receives job signals from external units such as regional processors and other peripherals and distributes them to the job signal memory 12 via the memory interface 14. Since job signals from external units normally originate from external events, the system can be regarded as event-driven. The job signal memory 12 is either a special purpose memory or allocated in the main memory 40 of the processing unit. In either case, the job signal memory is shared by the scheduler 10 and the processing unit 50. The job signal memory accommodates a pool of memory elements for storing job signals and communication messages bound for external units. Preferably, the job signal scheduler 10 executes most of its operations on pointers to job signals and communication messages instead of on the signals themselves. Therefore, each job signal is associated with a pointer to a memory element in the job signal memory 12 and the corresponding pointer is sent to the pointer memory 13 via the memory interface 14 when the corresponding job signal is written into the job signal memory 12.

In Fig. 4, single lines generally represent pointer signals P, and double lines represent job signals/communication messages S or data signals D.

The pointer memory 13 is normally partitioned into a number of separate memory queues (indicated by the dashed boxes in Fig. 4). By using several queues, instead of just one, it is possible to handle priorities; pointers with different priority levels are stored in different memory queues. When a new job signal arrives to the job signal scheduler 10, priority level information included in the header of the job signal is analyzed and the memory queue into which the corresponding pointer should be placed is identified. Next, the job signal S is written into the job signal memory 12, and the pointer P is placed in the selected queue in the pointer memory 13. The queues in the pointer memory 13 are normally organized as first-in-first-out (FIFO) queues, which are served in order of priority.

By storing the pointers P in order of arrival and according to priority level information, a scheduling order is obtained in the pointer memory 13. When the processing unit 50 can accept a new job signal, the control unit 17 makes sure that the oldest pointer P in the memory queue of the highest priority level is forwarded to the TPU unit 15. The TPU unit 15 reads the memory element in the job signal memory 12 indicated by the pointer P to fetch the relevant job signal, and sends the retrieved job signal S to the processing unit 50. In this way, the job signals in, the job signal memory 12 are forwarded to the processing unit 20 according to the scheduling order in the pointer memory 13.

Preferably, the job signal memory 12 and the pointer memory 13 are implemented in a common memory, for example the main memory 40.

Preferably, the interrupt handling in the job signal scheduler 10 should be able to initiate an interrupt of jobs in the processing unit 50 if a job signal of higher priority level is sent from the scheduler 10 to the processing unit 50.

Preferably, the processing unit 50 processes job signals of only one priority level at a time. Signals of higher priority levels from the job signal scheduler 10 will interrupt signals of lower levels. For example, the job signal scheduler 10 may initiate an interrupt by sending an interrupt request to the processing unit 50, and the processing unit will then interrupt the currently executing jobs.

The processing unit 50 includes a job signal queue 20, a plurality of processing elements/processors 30-1 to 30-4, a combined dependency checker and write queue arrangement 35 for handling data dependencies and temporarily storing the results of speculatively executed jobs, and a memory system 40 divided into a program store 43 and a data store 44. In this example, the processing elements 30-1 to 30-4 are preferably in the form of execution pipelines. Therefore, the processing elements will be referred to as execution pipelines in the following.

The job signals from the job signal scheduler 10 are buffered in the job queue 20, which has a number of storage positions for storing the job signals. Each job signal is stored together with additional information in a respective storage position of the job queue 20.

In general, each job signal comprises a header and a signal body. In addition to administrative information, the header normally includes a pointer to software code in the program store 43, and the body of the job signal includes input operands necessary for execution of the corresponding job, thus generally making the job signal self-contained. Preferably, the software code is pointed out via one or more table look-ups. This generally means that the pointer actually points to a look-up table entry, which in turn points to the software code. The signal body could be a signal message from an external unit such as a regional processor or another processor.

A job may be defined as the instruction stream specified by the signal header, and the job starts with the reception of the job signal and ends by the calling of an end-job routine. It should however be noted that the job signal itself normally does not include any instructions, only a pointer to instructions in the software code stored in the program store 43, and operands required in the execution of the instructions.

Preferably, the execution pipelines 30-1 to 30-4 "fetch" job signals from different storage positions in the job queue 20 to independently execute different jobs in parallel. Whenever an execution pipeline is free to start executing a new job, the job queue 20 is examined to find an unallocated job signal, and the unallocated job signal is assigned to the pipeline. The job signal is then processed in the execution pipeline and the corresponding job is executed. At all times during parallel job execution, only one job signal in the job queue 20 is in commit position, allowing the execution pipeline to which the job signal is assigned to commit/retire the corresponding job. The jobs in the other execution pipelines are executed speculatively and may be flushed if a data dependency is detected by the dependency checker 35.

A general requirement for systems where the information flow is governed by protocols is that certain related events must be processed in the received order. This is the invariant of the system, no matter how the system is implemented. The commit order between jobs is normally defined by the arrival to the processing core and will generally not be changed. However, in a processing system handling job signals of different priority levels, it may be useful to put a job signal of higher priority level before job signals of lower priority so that the commit order between jobs of the same priority level is defined by the arrival to the processing unit 50.

In general, each execution pipeline comprises circuitry for fetching instructions from the program store, decoding the instructions, executing the instructions and performing memory write back and signal sendings. An example of a specific execution pipeline that can be used by the invention is the pipeline in the Ericsson AXE Digital Switching Systems.

The job queue 20, in combination with appropriate control software or hardware, manages the protocol needed for assigning job signals to the execution pipelines 30-1 to 30-4, keeping track of jobs that have been speculatively executed to completion, successively assigning commit priority to the job signals, and removing job signals that have been committed.

The job queue 20 is normally an ordinary queue with a number of storage positions. As an example, the job queue 20 may be implemented in a common memory by logically dividing a predetermined part of the memory into a number of storage positions, each of which having its own individual memory address. In general, each storage position in the job queue 20 is divided into a number of fields, for example as described in Table I below.

**Table I**

| Field name | Description |
|---|---|
| Valid | If set, the storage position contains a valid job signal |
| Taken | If set, the job signal has been assigned to an execution pipeline |
| Finished | If set, the corresponding job has been executed to completion, but not committed |
| Pipe id & Job id | Represents the identity of the pipe handling the job signal, and the identity the job signal is given in the pipe. |
| Signal | The signal header and data |

The field 'Valid' is used for indicating whether a storage position contains a valid job signal or not. When a job signal is received from the job signal scheduler 10, it is placed in the first free position of the job queue 20, i.e. a position in which the Valid flag is not set. The Valid flag is then set to indicate that the 'Signal' field now contains a valid job signal, and that the position is occupied.

The field 'Taken' is used for indicating whether the job signal has been assigned to a pipeline or not. When a job signal in a storage position of the job queue 20 is assigned to an execution pipeline, the Taken flag for that position is set to indicate that the job signal has been assigned.

The field 'Finished' is used for indicating that a job has been speculatively executed to completion, and the field 'Pipe id & Job id' is used for indicating the identity of the pipe and the identity the job signal and/or the corresponding job is given in that pipe. When a pipeline has executed the end-job routine for a first job, the Finished flag is set to signal that the job has been executed to completion and is ready to be committed. If desired, the pipeline is now ready to fetch a second speculative job signal. The first job is assigned the job id "1" of the pipe in question and the second job to be executed in the pipe is assigned the job id "2". If the pipe finishes the second job before it receives commit priority, a third speculative job may be executed, and so on. In general, a trade-off between the number of jobs per pipe and complexity is made, so in practice the number of jobs per pipe is limited. In the following it is however assumed that each pipeline handles only one job at a time.

In a processing system adapted for speculative execution, jobs may generally be in the following states: Not_Started, Started and Finished. These states may be encoded in the job queue 20 in different ways, and it should be understood that the fields Valid, Taken and Finished of Table I is merely an example of one way of encoding these job states.

Preferably, the job queue 20 is associated with a pointer that points out which storage position in the job queue 20 that is in commit position. The job signal in commit position has commit priority, and the execution pipeline handling this job signal is enabled to perform memory write-back and commit signal sendings. When a job signal is moved into commit position, the corresponding pipeline starts to commit all write operations and signal sendings for the job. When the job has been executed to completion and all writes and signal sendings have been committed, the position is released by clearing the Valid flag and the job queue 20 is stepped by conventional means to move a new position into commit position, thus successively assigning commit priority to the job signals in the job queue.

The functions for handling the job queue 20, such as writing information into the job queue fields and successively assigning commit priority to the job signals, are preferably controlled by software, e.g. in the form of a micro code instruction program or an assembler program. Other functions in the processing system, such as handling flushes, controlling the write queue arrangement and controlling the scheduling mechanism, may also be implemented in software.

The dependency checker 35 is generally implemented by using one or more read buffers RB associated with the execution pipelines 30-1 to 30-4. When a pipeline fetches data from the data store 44, the read address or addresses are buffered in the corresponding read buffer. When the execution pipeline with commit priority performs write-back of variable data D to the data store 44, the write address to the data store is compared to the read addresses in the read buffers RB to see if there are any data dependencies between the jobs. This comparison is generally performed in an address comparator. If data read by a speculatively executing job is subsequently modified by the commit job, a data dependency exists and the speculatively executed or executing job has to be flushed and restarted.

Data store modifications proposed by a speculatively executed job are logged in the write queue arrangement 35, but not written into the data store 44 until the job gets commit priority. Preferably, the write queue arrangement 35 comprises a number of separate write queues, one write queue WQ dedicated to each one of the execution pipelines 30-1 to 30-4. For high performance, the write queues are normally implemented as cache memories, which are fast but relatively small memories. In general, when a speculative job gets commit priority, the write queue entries that belong to the job in question are immediately written into the data store 44. However, a commit job in execution does not generally store its data in its write queue, but simply forwards the corresponding memory address to the address comparator to enable dependency checking.

Alternatively, the write queue arrangement 35 is in the form of a single centralized write queue common to all execution pipelines, for example as described in the international patent application WO 88/02513 which discloses a combined dependency checker and write queue.

It should be understood that the job signals are generally assigned to the execution pipelines in a round-robin fashion. In a round robin, the pipelines can be regarded as arranged in a circular loop, which is traversed step by step. For example, this arrangement greatly simplifies the management of the commit position at the pipeline and write queue side. When the next job signal in the job queue 20 is moved into commit position, the corresponding execution pipeline is straightforwardly identified as the next pipeline in the loop compared to the previous commit pipeline, and the results stored in the write queue WQ dedicated to the identified pipeline are committed.

According to the invention speculatively generated job signals and communication messages are written directly into the job signal memory 12 via the FPU unit 16 and the memory interface 14. Only pointers to the memory areas in the job signal memory 12 where the corresponding job signals and messages can be found are stored temporarily in the write queues WQ, and transferred to the pointer memory 13 via the FPU unit 16 and the memory interface 14 at commit.

In addition to the extra parallelism that is extracted, memory area in the expensive write queue caches is saved. Furthermore, the execution pipelines may transfer generated job signals and communication messages in speculative mode. This means that the transmission of job signal data is spread out in time, resulting in a lower bandwidth requirement over the interface between the processing unit 50 and the job signal scheduler 10. Also, the write queues are off-loaded fast at commit since only pointers are transferred.

The job signal scheduler 10 sends pointers to free memory elements in the job signal memory 12 to the processing unit 50 to build a pool of free pointers. Each one of the execution pipelines 30-1 to 30-4 is generally allocated a number of such free pointers FP. Each execution pipeline speculatively writes a new job signal/communication message S generated by a speculatively executed job into one of the memory elements indicated by the allocated pointers, and stores the pointer P, referring to the memory element into which the job signal/communication message S is written, in the write queue WQ connected to the execution pipeline. Whenever an execution pipeline is assigned priority to commit the signal sending, the pointer P is transferred from the write queue WQ to the appropriate memory queue in the pointer memory 13 or to the I/O-unit 11 for transfer to an external unit. In the case of a new job signal, the appropriate memory queue in the pointer memory 13 is identified based on the priority level information in the corresponding job signal S, and the pointer P is written into a memory queue of the same priority level as the job signal. Since the memory queues in the pointer memory 13 are organized as FIFO queues and the memory queues are served in order of priority, a scheduling order is obtained in the pointer memory.

The job signal scheduler 10 keeps the pool of free pointers full by sending a pointer FP to the processing unit 50 via the TPU unit 15 as soon as the scheduler does not need it anymore.

It is not necessary to write a complete job signal or a complete communication message in one go. Large signals may be written in pieces, for example to prevent blocking of the bus interface between the processing unit 50 and the job signal scheduler 10. The processing unit 50 must then increment the address between bursts, and send the incremented address at the start of each burst.

In the foregoing, the execution pipes have been described as being separate entities, each having its own private resources for instruction execution. In general, however, many resources in an execution pipeline will not be fully utilized in the instruction execution. A resource can then be shared between the pipes, giving an execution pipe access to the resource either on request or in a time-multiplexed manner. A technique for implementing a high degree of resource sharing is simultaneous multithreading. In simultaneous multi-threading almost all resources are shared and the resources private to each pipeline are limited to a private program counter and a private mapping between logical register numbers in the instructions and physical registers.

It should also be understood that a pointer does not have to refer directly to a memory element in the job signal memory, but may refer to a job-signal-memory area via one or more table look-ups.

Also, dependency checking has been described with reference to an address comparison method. Alternatively, however, dependency checking may also be accomplished by a marker method, where each processing unit marks the use of variables in the main memory, and dependency collisions are detected based on the markings.

The embodiments described above are merely given as examples, and it should be understood that the present invention is not limited thereto. Further modifications, changes and improvements which retain the basic underlying principles disclosed and claimed herein are within the scope of the invention.

## Claims

1. A processing system comprising:
- an input/output device (10);
- multiple processors (30) for speculative execution of jobs;
- a memory (40; 12) shared by the processors (30) and the input/output device (10);
- means for assigning commit priority to the jobs, one job at a time;
**characterized in that** the processing system further comprises:
- means for speculatively allocating a private memory buffer in said shared memory (40; 12) for holding results of a speculatively executed job;
- means for transferring a pointer referring to the allocated private memory buffer to the input/output device (10) when commit priority is assigned to the speculatively executed job.

2. The processing system according to claim 1, wherein results of a speculatively executed job is in the form of a communication message, an operation system call or a job signal representative of a new job.

3. The processing system according to claim 1, wherein the input/output device (10) is an input/output processor, a network controller, an Ethernet circuit or a job signal scheduler.

4. The processing system according to claim 1, wherein the private memory buffer resides in the main memory (40) of the processing system or another memory shared by the processors (30) and the input/output device (10) such that the input/output device (10) can access the results by means of the transferred pointer.

5. The processing system according to claim 1, wherein each processor has its own private pool (45) of memory buffers from/to which it allocates and deallocates memory buffers.

6. The processing system according to claim 5, further comprising means for filling the private pools (45) of buffers with more buffers from a common pool of buffers, and releasing buffers from the private pools (45) into the common pool at high/low watermarks in the private pools (45).

7. The processing system according to claim 1, wherein each processor has its own list (32) of pointers to free memory buffers within a pool (45) of memory buffers, and the buffer allocating means allocates a memory buffer for holding results of a speculatively executed job by fetching a pointer from the head of the list of the corresponding processor.

8. The processing system according to claim 1, further comprising:
- means (35) for detecting a dependency between the speculatively executed job and the job with commit priority; and
- means for deallocating the speculatively allocated memory buffer in response to a detected dependency.

9. The processing system according to claim 1, wherein said transferring means comprises means for writing, when commit priority is assigned to the speculatively executed job, the pointer into a memory means (46) which is checked for pointers by the I/O-device (10).

10. The processing system according to claim 9, wherein the input/output device (10) is a network controller periodically polling the memory means (46) for pointers, and the network controller sends, when a pointer is found, a communication message retrieved from the private memory buffer associated with the pointer.

11. The processing system according to claim 9, wherein the memory means (46) is a ring structure allocated in the main memory (40) of the processing system, and the pointer is written into a position of the ring structure (46).

12. The processing system according to claim 1, further comprising means for speculatively writing the pointer to a memory means (WQ), and wherein said transferring means transfers the pointer from the memory means (WQ) to the input/output device (10) when commit priority is assigned to the speculatively executed job.

13. The processing system according to claim 12, wherein said memory means (WQ) is a write queue implemented as a hardware queue or allocated in the main memory (40) of the processing system.

14. The processing system according to claim 1, wherein:
- the input/output device (10) is a job signal scheduler scheduling job signals for processing by the multiple processors, said job signal scheduler having a job signal memory (12) for storing job signals;
- the allocating means speculatively allocates a private memory buffer in the job signal memory (12) for holding a new job signal generated by a speculatively executed job, the corresponding pointer being speculatively written into a memory means (WQ); and
- the transferring means transfers, when commit priority is assigned to the speculatively executed job, the pointer from the memory means (WQ) to the job signal scheduler (10) to enable scheduling of the new job signal.

15. The processing system according to claim 14, wherein each job signal and its corresponding pointer are associated with priority level information, and the job signal scheduler (10) comprises:
- a pointer memory (13) for storing pointers in order of arrival and according to the priority level information to obtain a scheduling order; and
- means for forwarding job signals from the job signal memory (12) for processing by the multiple processors (30) according to the scheduling order in the pointer memory (13).

16. The processing system according to claim 15, wherein the transferring means transfers the pointer into the pointer memory (13) to thereby put the pointer into the scheduling order.

17. A method for handling results in a processing system, said method comprising the steps of:
- speculatively executing (101) jobs in parallel by multiple processors (30);
- assigning commit priority to the jobs, one job at a time;
**characterized in that** said method further comprises the steps of:
- speculatively allocating (102) private memory buffers in a memory shared by the processors (30) and an input/output device (10) of the processing system for holding results of speculatively executed jobs;
- transferring (105), when commit priority is assigned to a speculatively executed job, a pointer referring to the corresponding allocated memory buffer to the input/ output device (10) which accesses the corresponding allocated memory buffer by means of the transferred pointer.

18. The method for handling results according to claim 17, further comprising the steps of:
- detecting (104) dependencies between speculatively executed jobs and the job with commit priority; and
- deallocating (106), if a dependency is detected for a speculatively executed job, the corresponding speculatively allocated memory buffer.

19. The method for handling results according to claim 17, wherein results of a speculatively executed job is in the form of a communication message, an operation system call or a job signal representative of a new job.

20. The method for handling results according to claim 17, wherein the input/output device (10) is an input/output processor, a network controller, an Ethernet circuit or a job signal scheduler.

21. The method for handling results according to claim 17, wherein said transferring step includes the step of writing, when commit priority is assigned to the speculatively executed job, the pointer into a memory means which is checked for pointers by the I/O-device.

22. The method for handling results according to claim 17, further comprising the step of speculatively writing the pointer to a memory means (WQ), and wherein said transferring step (105) includes transferring the pointer from the memory means (WQ) to the input/ output device (10) when commit priority is assigned to the speculatively executed job.

23. The method for handling results according to claim 17, wherein said step of speculatively executing jobs is performed by multiple processors (30), and said method further comprises the step of associating each processor with its own private pool (45) of memory buffers from/to which the processor allocates and deallocates memory buffers.

24. A processing system comprising:
- multiple processors (30) for speculative execution of jobs;
- a main memory (40) shared by the processors (30);
- means for assigning commit priority to the jobs, one job at a time;
**characterized in that** said processing system further comprises:
- means for speculatively allocating a private memory buffer in the main memory (40) of the processing system for holding a new record or object generated by a speculatively executed job so that the new record or object already is in place in the main memory (40) when commit priority is assigned to the speculatively executed job; and
- means for handing over a pointer referring to the allocated private memory buffer to shared memory when commit priority is assigned to the speculatively executed job.

25. The processing system according to claim 24, further comprising:
- means (35) for detecting a dependency between the speculatively executed job and the job with commit priority; and
- means for deallocating the speculatively allocated memory buffer in response to a detected dependency.

## Patentansprüche

1. Verarbeitungssystem, mit:
- einem Eingabe-/Ausgabegerät (10);
- mehreren Prozessoren (30) für eine spekulative Ausführung von Aufgaben;
- einem Speicher (40; 12), der gemeinsam von den Prozessoren (30) und dem Eingabe-/Ausgabegerät (10) geteilt wird;
- einer Vorrichtung zum Zuordnen einer Übergabepriorität zu den Aufgaben, eine Aufgabe zu einer Zeit;
**dadurch gekennzeichnet, dass** das Verarbeitungssystem weiter umfasst:
- eine Vorrichtung zum spekulativen Allozieren eines privaten Speicherpuffers in dem gemeinsamen geteilten Speicher (40; 12) zum Halten von Ergebnissen einer spekulativ ausgeführten Aufgabe;
- eine Vorrichtung zum Übertragen eines Zeigers, der auf den allozierten, privaten Speicherpuffer verweist, zu dem Eingabe-/Ausgabegerät (10), wenn die Übergabepriorität zu der spekulativ ausgeführten Aufgabe zugeordnet wird.

2. Verarbeitungssystem nach Anspruch 1, wobei Ergebnisse einer spekulativ ausgeführten Aufgabe in der Form einer Kommunikationsnachricht, eines Betriebssystemaufrufes oder eines Aufgabensignals vorliegen, das stellvertretend für eine neue Aufgabe ist.

3. Verarbeitungssystem nach Anspruch 1, wobei das Eingabe-/Ausgabegerät (10) ein Eingabe-/Ausgabeprozessor, ein Netzwerksteuergerät, eine Ethernet-Schaltung oder ein Aufgabensignalplaner ist.

4. Verarbeitungssystem nach Anspruch 1, wobei der private Speicherpuffer in dem Hauptspeicher (40) des Verarbeitungssystems oder einem anderen Speicher innewohnt, der von den Prozessoren (30) und dem Eingabe-Ausgabegerät (10) derart gemeinsam geteilt wird, dass das Eingabe-/Ausgabegerät (10) auf die Ergebnisse mittels des übertragenden Zeigers zugreifen kann.

5. Verarbeitungssystem nach Anspruch 1, wobei jeder Prozessor seinen eigenen privaten Pool (45) von Speicherpuffern aufweist, von denen/zu denen dieser Speicherpuffer alloziert und dealloziert.

6. Verarbeitungssystem nach Anspruch 5, weiter mit einer Vorrichtung zum Füllen des privaten Pools (45) von Puffern mit mehr Puffern aus einem gemeinsamen Pool von Puffern und Freigeben von Puffern aus den privaten Pools (45) in den gemeinsamen Pool bei Hoch-/Tiefwasser in den privaten Pools (45).

7. Verarbeitungssystem nach Anspruch 1, wobei jeder Prozessor seine eigene Liste (32) von Zeigern zu freien Speicherpuffern innerhalb eines Pools (45) von Speicherpuffern aufweist und die Puffer-allozierende Vorrichtung einen Speicherpuffer zum Halten von Ergebnissen einer spekulativ ausgeführten Aufgabe durch Holen eines Zeigers von dem Kopf der Liste des entsprechenden Prozessors alloziert.

8. Verarbeitungssystem nach Anspruch 1, weiter mit:
- einer Vorrichtung (35) zum Erfassen einer Abhängigkeit zwischen der spekulativ ausgeführten Aufgabe und der Aufgabe mit einer Übergabepriorität; und
- einer Vorrichtung zum Deallozieren des spekulativ ausallozierten Speicherpuffers in Reaktion auf eine erfasste Abhängigkeit.

9. Verarbeitungssystem nach Anspruch 1, wobei die Übertragungsvorrichtung eine Vorrichtung zum Schreiben des Zeigers in eine Speichervorrichtung (46) umfasst, die nach Zeigern durch das I/O-Gerät (10) überprüft wird, wenn eine Übergabepriorität zu der spekulativ ausgeführten Aufgabe zugeordnet wird.

10. Verarbeitungssystem nach Anspruch 9, wobei das Eingabe-/Ausgabegerät (10) ein Netzwerksteuergerät ist, das periodisch die Speichervorrichtung (46) nach Zeigern abfragt und das Netzwerksteuergerät eine Kommunikationsnachricht sendet, die von dem privaten Speicherpuffer abgerufen wird, der mit dem Zeiger verknüpft ist, wenn ein Zeiger gefunden wird.

11. Verarbeitungssystem nach Anspruch 9, wobei die Speichervorrichtung (46) eine Ringstruktur ist, die in dem Hauptspeicher (40) des Verarbeitungssystems alloziert ist und der Zeiger an eine Position der Ringstruktur (46) geschrieben wird.

12. Verarbeitungssystem nach Anspruch 1, weiter mit einer Vorrichtung zum spekulativen Schreiben des Zeigers zu einer Speichervorrichtung (WQ) und wobei die Übertragungsvorrichtung den Zeiger von der Speichervorrichtung (WQ) an das Eingabe-/Ausgabegerät (10) überträgt, wenn eine Übergabepriorität zu der spekulativ ausgeführten Aufgabe zugeordnet ist.

13. Verarbeitungssystem nach Anspruch 12, wobei die Speichervorrichtung (WQ) eine Schreibschlange ist, die als eine Hardwareschlange implementiert ist oder in dem Hauptspeicher (40) des Verarbeitungssystems alloziert ist.

14. Verarbeitungssystem nach Anspruch 1, wobei:
- das Eingabe-/Ausgabegerät (10) ein Aufgabensignalplaner ist, der Aufgabensignale zum Verarbeiten durch die mehreren Prozessoren plant, wobei der Aufgabensignalplaner einen Aufgabensignalspeicher (12) zum Speichern von Aufgabensignalen aufweist;
- die allozierende Vorrichtung spekulativ einen privaten Speicherpuffer in dem Aufgabensignalspeicher (12) zum Halten eines neuen Aufgabensignals alloziert, das von einer spekulativ ausgeführten Aufgabe erzeugt wird, wobei der entsprechende Zeiger spekulativ in eine Speichervorrichtung (WQ) geschrieben wird; und
- die Übertragungsvorrichtung den Zeiger von der Speichervorrichtung (WQ) an den Aufgabensignalplaner (10) überträgt, um ein Planen des neuen Aufgabensignals zu ermöglichen, wenn eine Übergabepriorität zu der spekulativ ausgeführten Aufgabe zugeordnet ist.

15. Verarbeitungssystem nach Anspruch 14, wobei jedes Aufgabensignal und sein entsprechender Zeiger mit einer Prioritätspegelinformation verknüpft ist, und der Ausgabensignalplaner (10) umfasst:
- einen Zeigerspeicher (13) zum Speichern von Zeigern in einer Ankunftsreihenfolge und gemäß der Prioritätspegelinformation, um eine Planungsreihenfolge zu erhalten; und
- eine Vorrichtung zum Weiterleiten von Aufgabensignalen von dem Aufgabensignalspeicher (12) zum Verarbeiten durch die mehreren Prozessoren (30) gemäß der Planungsreihenfolge in dem Zeigerspeicher (13).

16. Verarbeitungssystem nach Anspruch 15, wobei die Übertragungsvorrichtung den Zeiger in den Zeigerspeicher (13) überträgt, um **dadurch** den Zeiger in die Planungsreihenfolge zu setzen.

17. Verfahren zum Behandeln von Ergebnissen in einem Verarbeitungssystem, wobei das Verfahren die Schritte umfasst :
- spekulatives Ausführen (101) von Aufgaben im Parallelen durch mehrere Prozessoren (30);
- Zuordnen einer Übergabepriorität zu den Aufgaben, eine Aufgabe zu einer Zeit;
**dadurch gekennzeichnet, dass** das Verfahren weiter die Schritte umfasst:
- spekulatives Allozieren (102) privater Speicherpuffer in einem Speicher, der gemeinsam von den Prozessoren (30) und einem Eingabe-/Ausgabegerät (10) des Verarbeitungssystems geteilt wird, zum Halten von Ergebnissen von spekulativ ausgeführten Aufgaben;
- Übertragen (105) eines Zeigers, der auf den entsprechenden allozierten Speicherpuffer verweist, zu dem Eingabe-/Ausgabegerät (10), das auf den entsprechenden, allozierten Speicherpuffer mittels des übertragenen Zeigers zugreift, wenn eine Übergabepriorität zu einer spekulativ ausgeführten Aufgabe zugeordnet ist.

18. Verfahren zum Behandeln von Ergebnissen nach Anspruch 17, weiter mit den Schritten:
- Erfassen (104) von Abhängigkeiten zwischen spekulativ ausgeführten Aufgaben und der Aufgabe mit einer Übergabepriorität; und
- Deallozieren (106) des entsprechenden spekulativ allozierten Speicherpuffers, falls eine Abhängigkeit für eine spekulativ ausgeführte Aufgabe erfasst wird.

19. Verfahren zum Behandeln von Ergebnissen nach Anspruch 17, wobei Ergebnisse einer spekulativ ausgeführten Aufgabe in der Form einer Kommunikationsnachricht, eines Betriebssystemsaufrufs oder eines Aufgabensignals vorliegen, das eine neue Aufgabe darstellt.

20. Verfahren zum Behandeln von Ergebnissen nach Anspruch 17, wobei das Eingabe-/Ausgabegerät (10) ein Eingabe-/Ausgabeprozessor, ein Netzwerksteuergerät, eine Ethernet-Schaltung oder ein Aufgabensignalplaner ist.

21. Verfahren zum Behandeln von Ergebnissen nach Anspruch 17, wobei der übertragende Schritt den Schritt eines Schreibens des Zeigers in eine Speichervorrichtung einschließt, die nach Zeigern durch das I/O-Gerät überprüft wird, wenn eine Übergabepriorität zu der spekulativ ausgeführten Aufgabe zugeordnet ist.

22. Verfahren zum Behandeln von Ergebnissen nach Anspruch 17, weiter mit dem Schritt eines spekulativen Schreibens des Zeigers zu einer Speichervorrichtung (WQ) und wobei der übertragende Schritt (105) ein Übertragen des Zeigers von der Speichervorrichtung (WQ) zu dem Eingabe-/Ausgabegerät (10) einschließt, wenn eine Übergabepriorität zu der spekulativ ausgeführten Aufgabe zugeordnet ist.

23. Verfahren zum Behandeln von Ergebnissen nach Anspruch 17, wobei der Schritt eines spekulativen Ausführens von Aufgaben durch mehrere Prozessoren (30) durchgeführt wird und das Verfahren weiter den Schritt eines Verknüpfens jedes Prozessors mit seinem eigenen privaten Pool (45) von Speicherpuffern umfasst, von denen/ zu denen der Prozessor Speicherpuffer alloziert und dealloziert.

24. Verarbeitungssystem, mit:
- mehreren Prozessoren (30) für eine spekulative Ausführung von Aufgaben;
- einem Hauptspeicher (40), der gemeinsam von den Prozessoren (30) geteilt wird;
- einer Vorrichtung zum Zuordnen einer Übergabepriorität zu den Aufgaben, eine Aufgabe zu einer Zeit;
**dadurch gekennzeichnet, dass** das Verarbeitungssystem weiter umfasst:
- eine Vorrichtung zum spekulativen Allozieren eines privaten Speicherpuffers in dem Hauptspeicher (40) des Verarbeitungssystems zum Halten eines neuen Satzes oder Objektes, das von der spekulativ ausgeführten Aufgabe erzeugt wird, so dass der neue Satz oder das Objekt sich bereits in dem Hauptspeicher (40) befindet, wenn eine Übergabepriorität zu der spekulativ ausgeführten Aufgabe zugeordnet wird; und
- eine Vorrichtung zum Übergeben eines Zeigers, der auf den allozierten, privaten Speicherpuffer verweist, an einen gemeinsam geteilten Speicher, wenn eine Übergabepriorität zu der spekulativ ausgeführten Aufgabe zugeordnet ist.

25. Verarbeitungssystem nach Anspruch 24, weiter mit:
- einer Vorrichtung (35) zum Erfassen einer Abhängigkeit zwischen der spekulativ ausgeführten Aufgabe und der Aufgabe mit Übergabepriorität;
- einer Vorrichtung zum Deallozieren des spekulativ allozierten Speicherpuffers in Reaktion auf eine erfasste Abhängigkeit.

## Revendications

1. Système de traitement comportant :
- un dispositif d'entrée/sortie (10) ;
- des processeurs multiples (30) pour une exécution spéculative de tâches ;
- une mémoire (40 ; 12) partagée par les processeurs (30) et le dispositif d'entrée/sortie (10) ;
- un moyen pour affecter une priorité d'engagement aux tâches, une tâche à la fois ;
**caractérisé en ce que** le système de traitement comporte en outre :
- un moyen pour allouer de façon spéculative un tampon de mémoire privé dans ladite mémoire partagée (40 ; 12) pour contenir des résultats d'une tâche exécutée de façon spéculative ;
- un moyen pour transférer au dispositif (10) d'entrée/sortie un pointeur s'appliquant au tampon de mémoire privé alloué lorsqu'une priorité d'engagement est affectée à la tâche exécutée de façon spéculative.

2. Système de traitement selon la revendication 1, dans lequel des résultats d'une tâche exécutée de façon spéculative se présentent sous la forme d'un message de communication, d'un appel de système d'exploitation ou d'un signal de tâche représentatif d'une nouvelle tâche.

3. Système de traitement selon la revendication 1, dans lequel le dispositif (10) d'entrée/sortie est un processeur d'entrée/sortie, un contrôleur de réseau, un circuit Ethernet ou un planificateur de signal de tâche.

4. Système de traitement selon la revendication 1, dans lequel le tampon de mémoire privé réside dans la mémoire principale (40) du système de traitement ou dans une autre mémoire partagée par les processeurs (30) et le dispositif (10) d'entrée/sortie de manière que le dispositif (10) d'entrée/sortie puisse accéder aux résultats au moyen du pointeur transféré.

5. Système de traitement selon la revendication 1, dans lequel chaque processeur a son propre groupement privé (45) de tampons de mémoire duquel/vers lequel il alloue et désalloue des tampons de mémoire.

6. Système de traitement selon la revendication 5, comportant en outre un moyen destiné à remplir des groupements privés (45) de tampons avec davantage de tampons provenant d'un groupement commun de tampons, et à libérer des tampons des groupements privés (45) dans le groupement commun avec des filigranes haut/bas dans les groupements privés (45).

7. Système de traitement selon la revendication 1, dans lequel chaque processeur a sa propre liste (32) de pointeurs pour libérer des tampons de mémoire dans un groupement (45) de tampons de mémoire, et le moyen d'attribution de tampon attribue un tampon de mémoire destiné à contenir des résultats d'une tâche exécutée de façon spéculative en extrayant un pointeur de la tête de la liste du processeur correspondant.

8. Système de traitement selon la revendication 1, comportant en outre :
- un moyen (35) destiné à détecter une dépendance entre la tâche exécutée de façon spéculative et la tâche ayant une priorité d'engagement ; et
- un moyen destiné à désallouer le tampon de mémoire alloué de façon spéculative en réponse à une dépendance détectée.

9. Système de traitement selon la revendication 1, dans lequel ledit moyen de transfert comprend un moyen destiné à écrire, lorsqu'une priorité d'engagement est affectée à la tâche exécutée de façon spéculative, le pointeur dans un moyen à mémoire (46) qui est soumis à une vérification portant sur des pointeurs par le dispositif E/S (10).

10. Système de traitement selon la revendication 9, dans lequel le dispositif d'entrée/sortie (10) est un contrôleur de réseau interrogeant périodiquement le moyen à mémoire (46) au sujet des pointeurs, et le contrôleur de réseau envoie, lorsqu'un pointeur est trouvé, un message de communication récupéré depuis le tampon de mémoire privé associé au pointeur.

11. Système de traitement selon la revendication 9, dans lequel le moyen à mémoire (46) est une structure en anneau allouée dans la mémoire (40) principale du système de traitement, et le pointeur est écrit dans une position de la structure en anneau (46).

12. Système de traitement selon la revendication 1, comportant en outre un moyen destiné à écrire de façon spéculative le pointeur sur un moyen à mémoire (WQ), et dans lequel ledit moyen de transfert transfert le pointeur du moyen à mémoire (WQ) au dispositif d'entrée/sortie (10) lorsqu'une priorité d'engagement est affectée à la tâche exécutée de façon spéculative.

13. Système de traitement selon la revendication 12, dans lequel ledit moyen à mémoire (WQ) est une file d'attente d'écriture exécutée sous la forme d'une file d'attente matérielle ou allouée dans la mémoire principale (40) du système de traitement.

14. Système de traitement selon la revendication 1, dans lequel :
- le dispositif d'entrée/sortie (10) est un planificateur de signaux de tâches planifiant des signaux de tâches pour un traitement par les multiples processeurs, ledit planificateur de signaux de tâches ayant une mémoire (12) de signaux de tâches destinée à stocker des signaux de tâches ;
- le moyen d'allocation alloue de façon spéculative un tampon de mémoire privé dans la mémoire (12) de signaux de tâches pour contenir un nouveau signal de tâche généré par une tâche exécutée de façon spéculative, le pointeur correspondant étant écrit de façon spéculative dans un moyen à mémoire (WQ) ; et
- le moyen de transfert transfert, lorsqu'une priorité d'engagement est affectée à la tâche exécutée de façon spéculative, le pointeur du moyen à mémoire (WQ) au planificateur (10) de signaux de tâches pour valider la planification du nouveau signal de tâche.

15. Système de traitement selon la revendication 14, dans lequel chaque signal de tâche et son pointeur correspondant sont associés à une information de niveau de priorité, et le planificateur (10) de signaux de tâches comporte :
- une mémoire (13) de pointeurs destinée à stocker des pointeurs dans l'ordre d'arrivée et conformément à l'information de niveau de priorité pour obtenir un ordre de planification ; et
- un moyen destiné à envoyer des signaux de tâches depuis la mémoire (12) de signaux de tâches pour un traitement par les multiples processeurs (30) conformément à l'ordre de planification dans la mémoire (13) de pointeurs.

16. Système de traitement selon la revendication 15, dans lequel le moyen de transfert transfert le pointeur dans la mémoire (13) de pointeurs pour placer ainsi le pointeur dans l'ordre de planification.

17. Procédé pour traiter des résultats dans un système de traitement, ledit procédé comprenant les étapes qui consistent :
- à exécuter (101) de façon spéculative des tâches en parallèle par de multiples processeurs (30) ;
- à affecter une priorité d'engagement aux tâches, une tâche à la fois ;
**caractérisé en ce que** ledit procédé comprend en outre les étapes qui consistent :
- à allouer (102) de façon spéculative des tampons de mémoire privée dans une mémoire partagée par les processeurs (30) et un dispositif (10) d'entrée/sortie du système de traitement pour contenir des résultats de tâches exécutées de façon spéculative ;
- à transférer (105), lorsqu'une priorité d'engagement est affectée à une tâche exécutée de façon spéculative, un pointeur, s'appliquant au tampon de mémoire alloué correspondant, au dispositif (10) d'entrée/sortie qui accède au tampon de mémoire alloué correspondant au moyen du pointeur transféré.

18. Procédé pour traiter des résultats selon la revendication 17, comprenant en outre les étapes qui consistant :
- à détecter (104) des dépendances entre des tâches exécutées de façon spéculative et la tâche ayant une priorité d'engagement ; et
- à désallouer (106), si une dépendance est détectée pour une tâche exécutée de façon spéculative, le tampon de mémoire alloué de façon spéculative, correspondant.

19. Procédé pour traiter des résultats selon la revendication 17, dans lequel les résultats d'une tâche exécutée de façon spéculative se présentent sous la forme d'un message de communication, d'un appel d'un système d'exploitation ou d'un signal de tâche représentatif d'une nouvelle tâche.

20. Procédé pour traiter des résultats selon la revendication 17, dans lequel le dispositif (10) d'entrée/sortie est un processeur d'entrée/sortie, un contrôleur de réseau, un circuit Ethernet ou un planificateur de signaux de tâches.

21. Procédé pour traiter des résultats selon la revendication 17, dans lequel ladite étape de transfert comprend l'étape d'écriture, lorsqu'une priorité d'engagement est affectée à la tâche exécutée de façon spéculative, du pointeur dans un moyen à mémoire qui fait l'objet d'une vérification portant sur des pointeurs par le dispositif E/S.

22. Procédé pour traiter des résultats selon la revendication 17, comprenant en outre' l'étape d'écriture spéculative du pointeur sur un moyen à mémoire (WQ), et dans lequel ladite étape de transfert (105) comprend le transfert du pointeur du moyen à mémoire (WQ) au dispositif (10) d'entrée/sortie lorsque la priorité d'engagement est affectée à la tâche exécutée de façon spéculative.

23. Procédé pour traiter des résultats selon la revendication 17, dans lequel ladite étape d'exécution spéculative de tâches est réalisée par des processeurs multiples (30), et ledit procédé comprend en outre l'étape consistant à associer chaque processeur à son propre groupement privé (45) de tampons de mémoire duquel/vers lequel le processeur alloue et désalloue des tampons de mémoire.

24. Système de traitement comportant :
- des processeurs multiples (30) pour une exécution spéculative de tâches ;
- une mémoire principale (40) partagée par les processeurs (30) ;
- un moyen destiné à affecter une priorité d'engagement aux tâches, une tâche à la fois ;
**caractérisé en ce que** ledit système de traitement comporte en outre :
- un moyen destiné à allouer de façon spéculative un tampon de mémoire privé dans la mémoire principale (40) du système de traitement pour contenir un nouvel enregistrement ou objet généré par une tâche exécutée de façon spéculative afin que le nouvel enregistrement ou objet soit déjà en place dans la mémoire principale (40) lorsqu'une priorité d'engagement est affectée à la tâche exécutée de façon spéculative ; et
- un moyen destiné à faire passer un pointeur s'appliquant au tampon de mémoire privé alloué à une mémoire partagée lorsqu'une priorité d'engagement est affectée à la tâche exécutée de façon spéculative.

25. Système de traitement selon la revendication 24, comportant en outre :
- un moyen (35) destiné à détecter une dépendance entre la tâche exécutée de façon spéculative et la tâche ayant une priorité d'engagement ; et
- un moyen destiné à désallouer le tampon de mémoire alloué de façon spéculative en réponse à une dépendance détectée.
